# EUROPEAN PATENT APPLICATION

(11) **EP 1 492 206 A1**
(43) Date of publication of application: **29.12.2004**
(21) Application number: 04253759.7
(22) Date of filing: 23.06.2004
(51) Int. Cl.: H01S 3/067, G02B 6/16

(54) **Rare-earth-doped fiber and optical fiber laser using the same**

(30) Priority: 24.06.2003 JP 2003179848
(71) Applicant: FUJIKURA LTD., Kohtoh-ku Tokyo (JP)
(72) Inventor: Shima, Kensuke c/o Fujikura Ltd., Sakura-shi, Chiba-ken (JP); Sakai, Tetsuya c/o Fujikura Ltd., Sakura-shi, Chiba-ken (JP)
(74) Representative: Calderbank, Thomas Roger

(57) **Abstract**

A rare-earth-doped fiber is formed by a center core (11) which is made by a silica glass to which a rare-earth element is doped, an outer core (12), an inner cladding (13) having a lower refractive index than these members which is disposed around the center core (11) and the outer core (12), and an outer cladding (14) having lower refractive index than these members which is disposed around the inner cladding. At least the center core or the outer core is disposed in an area such that the distance between the center core or the outer core and the center of the rare-earth-doped fiber should be greater than 0.71r (r indicates a radius of the inner cladding). By doing this, it is possible to provide a rare-earth-doped fiber and an optical fiber laser using the same which has a superior pumping efficiency such that it is possible to realize a small optical fiber laser.

## Description

The present application is based on patent application No. 2003-179848 filed in Japan June 24, 2003, the content of which is incorporated herein by reference.

### BACKGROUND OF THE INVENTION

### Field of the Invention

The present invention relates to a rare-earth-doped fiber which is used for an optical fiber laser and an optical fiber laser using the same.

### Description of Related Art

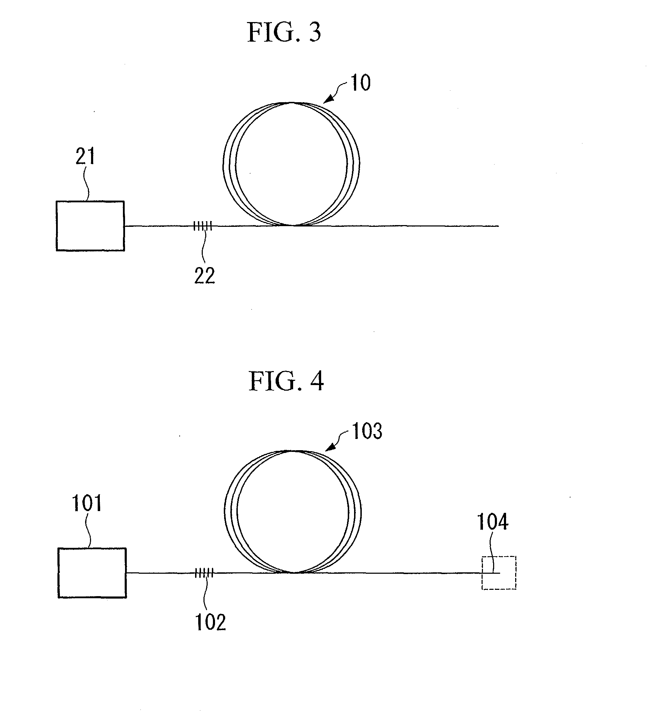

FIG. 4 is a cross section for an example for a conventional optical fiber laser.

In FIG. 4, reference numeral 101 indicates a pumping laser diode. Reference numeral 102 indicates an optical filter. Reference numeral 103 indicates a rare-earth-doped fiber. Reference numeral 104 indicates a tip section of the rare-earth-doped fiber.

In this optical fiber laser, an optical filter 102 is connected to an end surface of the rare-earth-doped fiber 103 for transmitting a laser light which is emitted from a pumping laser diode 101 and reflecting a laser light which is emitted from the rare-earth-doped fiber 103. A pumping laser diode 101 is connected to the optical filter 102 for emitting the laser light so as to be incident into the rare-earth-doped fiber 103 (see US Patent No. 6,347,100).

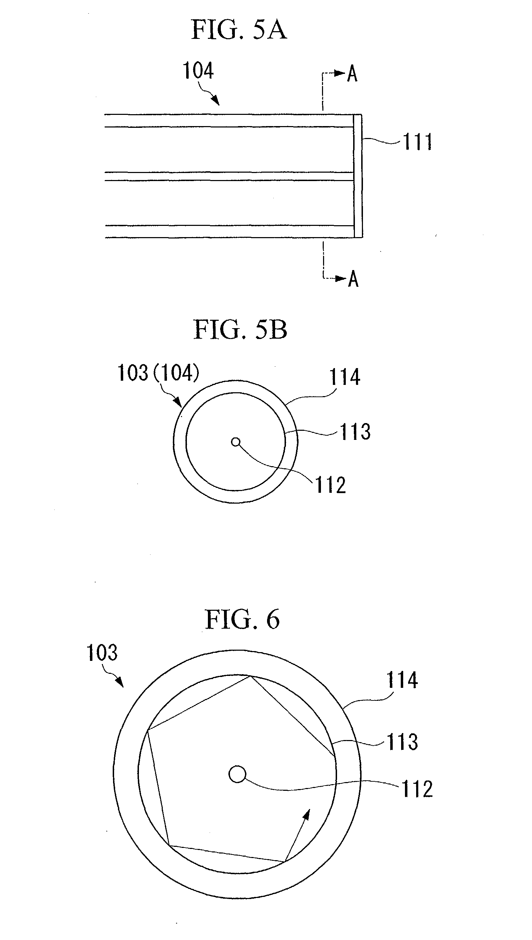

FIGS. 5A and 5B are views for showing a tip section 104 of the rare-earth-doped fiber 103 in an enlarged manner. FIG. 5A is a cross section for the rare-earth-doped fiber 103 along a center axis of the rare-earth-doped fiber 103. FIG. 5B is a cross section viewed in a A-A line in FIG. 5A.

In FIGS. 5A and 5B, reference numeral 111 indicates a mirror which transmits a part of the laser light which is emitted from the rare-earth-doped fiber 103 and reflects a part of the laser light. Reference numeral 112 indicates a core of the rare-earth-doped fiber 103 to which a rare-earth-doped element is doped. Reference numeral 113 indicates an inner cladding which has a lower refractive index than the refractive index in the core 112. Reference numeral 114 indicates an outer cladding which has a lower refractive index than the refractive index in the inner cladding 113.

As shown in FIG. 4, an rare-earth-doped fiber 103 has only a core 112 in a conventional optical fiber laser. It is common that a diameter of the core 112 is set at several µm so as to provide a single mode in the laser light. If a multi-mode oscillation occurs in the optical fiber laser in which the rare-earth-doped fiber 103 is used; thus, the operability may be unstable under condition that the core 112 is a multi-mode waveguide, this is because a diameter of the core 112 is set at several µm.

Also, if the diameter of the core 112 is several µm, a volume for the core per a unit length of the rare-earth-doped fiber 103 is small. As a result, a content of the rare-earth-doped element per a unit length of the rare-earth-doped fiber 103 is fewer. Therefore, a long rare-earth-doped fiber 103 is necessary for providing an optical fiber laser which has a higher output; thus, it is difficult to form a small device which is used for the optical fiber laser.

Furthermore, as shown in FIG. 6, skew modes of a pumping light (laser light) which do not transmit through the core 112 exist in the rare-earth-doped fiber 103; therefore, there is a problem in that it is difficult to realize an efficient pumping operation in the rare-earth-doped element which is contained in the core 112.

### SUMMARY OF THE INVENTION

The present invention was made in consideration of the above problem. An object of the present invention is to provide a rare-earth-doped fiber which has a superior pumping efficiency and a higher content for the rare-earth-doped element per a unit length and an optical fiber laser using the same.

The present invention is a rare-earth-doped fiber which comprises a plurality of cores which are made of silica glasses to which rare-earth-doped elements are doped, an inner cladding which is disposed around the core such that the refractive index in the inner cladding is lower than a refractive index in the core, and an outer cladding which is disposed around the inner cladding such that the refractive index in the outer cladding is lower than the refractive index in the inner cladding.

Here, silica glass, which is used for the core, is pure silica glass or a silica as Ge or Al is doped.

In the above rare-earth-doped fiber, it is preferable that a distance between at least the core and a center of the rare-earth-doped fiber is disposed in an area outer than 0.71 of a radius of the inner cladding.

The present invention provides an optical fiber laser in which the above rare-earth doped fiber is used.

As explained above, in the present invention, the rare-earth-doped fiber has a plurality of cores which are made of silica glasses to which the rare-earth-doped elements are doped. Thus, it is possible to eliminate an unstability in an oscillation ; therefore, the operability of the optical fiber laser can be stable.

Also, a volume of an entire core is great. Also, more rare-earth-doped element are doped per a unit length. Therefore, it is possible to realize a higher output by an optical fiber laser in which a short rare-earth-doped fiber is used. Thus, it is possible to realize a small device for the rare-earth-doped fiber.

Also, the rare-earth-doped fiber has at least a core not only in a center of a fiber but also in a periphery of the center of the fiber in which the rare-earth-doped element is doped. Therefore, a skew mode in the pumped light can be used effectively; thus, a pumping efficiency can be improved.

Furthermore, a plurality of cores are included in the inner cladding commonly; therefore, it is possible to pump the plurality of cores by launching the pumping light into the fiber from a light source. Therefore, in the optical fiber laser in which the rare-earth-doped fiber of the present invention is used, it is possible to reduce sections for emitting the pumping light to be incident thereinto than in a case for a high-output optical fiber laser in which a plurality of rare-earth-doped fibers are used. Therefore, it is possible to produce a high-output optical fiber laser by a cheaper cost.

### BRIEF DESCRIPTION OF THE DRAWINGS

FIG. 1 is a cross section for an example for the rare-earth-doped fiber according to the present invention.
FIG. 2 is a cross section for showing a skew mode in a cross section of the rare-earth-doped fiber according to the present invention.
FIG. 3 is a cross section for an example for a conventional optical fiber laser according to the present invention.
FIG. 4 is a cross section for an example for a conventional optical fiber laser.
FIGS. 5A and 5B are views for a tip section of the rare-earth-doped fiber shown in FIG. 3. FIG. 5A is a cross section of the rare-earth-doped fiber along a central axis of the rare-earth-doped fiber. FIG. 5B is a cross section viewed in a A-A line in FIG. 5A.
FIG. 6 is a cross section for showing a skew mode in a cross section of the conventional rare-earth-doped fiber.

### DETAILED DESCRIPTION OF THE INVENTION

The present invention is explained in detail as follows.

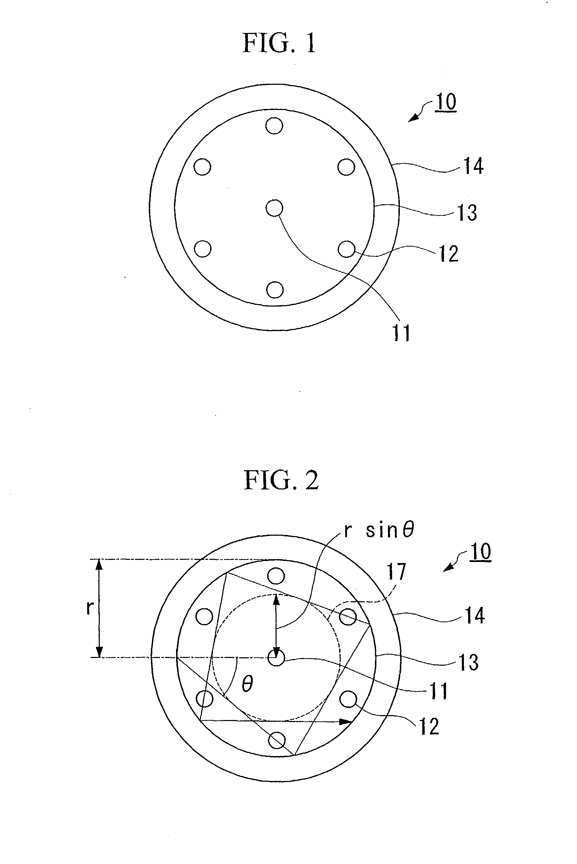

FIG. 1 is a cross section for an example for the rare-earth-doped fiber according to the present invention.

A rare-earth-doped fiber 10 in this example comprises a center core 11 which is disposed in a center of the rare-earth-doped fiber 10, six outer claddings 12 which are disposed near a boarder of an inner cladding 13 and an outer cladding 14 in equal intervals therebetween so as to have the central axis in common with the center core 11, an inner cladding 13 which is disposed around the center core 11 and the outer core 12 so as to be concentric around the center core 11, and an outer cladding 14 which is disposed around the inner cladding 13.

A diameter of the rare-earth-doped fiber 10 is 200 µm to 1000 µm. The diameter of the rare-earth-doped fiber 10 is set preferably according to the quantity of the center cores 11 and the outer cores 12 which are disposed in the inner cladding 13.

Diameters for the center core 11 and the outer core 12 are 2 µm to 12 µm.

Also, the center core 11 and the outer core 12 are formed by silica glass to which approximately 1,000 to 40,000 ppm (weight ratio) of the rare-earth-doped elements are doped. For such a rare-earth-doped element, it is possible to use erbium, yttrium, ytterbium, neodymium, holmium, and praseodymium. These rare-earth-elements are doped to the center core 11 and the outer cores 12; therefore, rare-earth ions absorb the pumping light so as to be under condition that the ions are excited. Thus, it is possible to emit a light which has a different wavelength from the wavelength of the pumping light.

The diameter of the inner cladding 13 is 100 µm to 600 µm. The diameter of the inner cladding 13 is set preferably according to the quantity of the center cores 11 and the outer cores 12 which are disposed in the inner cladding 13.

Also, the inner cladding 13 is formed by a material member which has a refractive index which is lower than a refractive index in a silica glass which forms the center core 11 and the outer core 12 to which a rare-earth element is doped. For such a material member which has a refractive index which is lower than a refractive index in the silica glass which form the center core 11 and the outer core 12, for example, it is possible to name a fluorine-doped silica glass. Also, if a dopant such as a germanium for increasing the refractive index is doped to the center core and the outer core, it is possible to use a silica glass for the cladding.

The diameter of the outer cladding 14 is 200 µm to 800 µm. The diameter of the outer cladding 14 is set preferably according to the quantity of the center cores 11 and the outer cores 12 which are disposed in the inner cladding 13.

Also, the outer cladding 14 is formed by a material member which has a refractive index which is lower than a refractive index in a material member which forms the inner cladding 13. For such a material member which forms the outer cladding 14, it is possible to name a fluorine resin.

Here, in this embodiment, a rare-earth-doped fiber 10 is shown which comprises the center core 11, and six outer cores 12 which is disposed around the center core 11 so as to have equal intervals among the outer cores 12 such that a central axes are common between the center core 11 and the outer cores 12. More importantly, the rare-earth-doped fiber of the present invention is not limited to such a structure. That is, it is acceptable even if a core is not disposed in a center of the fiber. In the rare-earth-doped fiber according to the present invention, it is acceptable as long as a plurality of cores are disposed randomly in the inner cladding.

Also, an uncoated fiber is shown to which a coating is not disposed in the present embodiment for a rare-earth-doped fiber 10. However, the present invention is not limited such a structure. It is acceptable if the rare-earth-doped fiber according to the present invention may be a fiber which has a coating layer around a cladding.

In order to manufacture such a rare-earth-doped fiber, at first, a plurality of through holes are formed at predetermined positions on a material member for the inner cladding which has a refractive index which is lower than a refractive index in a material member for the core in a parallel direction with a longitudinal direction. Material members to which a rare-earth element is doped for forming the core are inserted in these through holes; thus, a material member for forming an optical fiber is prepared. Next, the material member for forming the optical fiber is drawn until a predetermined diameter of the material member for forming the optical fiber is obtained. After that, the material member for forming the optical fiber is coated by a resin which has a refractive index which is lower than a refractive index in a material member for forming the inner cladding; thus, a rare-earth-doped fiber is obtained.

A difference of the refractive indices among the center core, the outer core, and the inner core and diameters of the inner core and the outer core are selectively determined so as to realize a single mode operation in each core in a wavelength in which the rare-earth element illuminated. In such a wavelength, a laser oscillated. By doing this, it is possible to avoid unstable oscillation in the optical fiber laser which uses such a rare-earth-doped fiber 10; thus, it is possible to realize a stable operation.

The rare-earth-doped fiber 10 has a core which is formed by a silica glass to which a plurality of rare-earth elements are doped; therefore, a volume for an entire core is great and a quantity of the rare-earth elements is great for a unit length. Therefore, it is possible to realize a large output from the optical fiber laser which uses a short rare-earth-doped fiber 10; therefore, it is possible to realize a small device.

Also, the rare-earth-doped fiber 10 has a plurality of cores (the center core 11 and the outer core 12); therefore, a mode field diameter (hereinafter called an MFD) for an entire core is great; thus, it is possible to avoid an unstable oscillation in the optical fiber laser. Thus, it is possible to realize a stable operation.

Also, the rare-earth-doped fiber 10 has an outer core 12 to which a rare-earth element is doped in addition to the center core 11 which is disposed in a center of the fiber; therefore, it is possible to utilize a skew mode of the pumping light; thus, it is possible to improve the efficiency for pumping a light.

A light in a skew mode is reflected entirely in a boarder section between the inner cladding and the outer cladding in the optical fiber. Therefore, it is preferable that the outer core 12 should be disposed as far as possible from the center of the fiber such that a light which has as many modes as possible in the pumping light which transmits in the inner cladding 13 should transmit through the outer core 12.

Here, as shown in FIG. 2, "r" indicates a radius of the inner cladding 13. Also, "0" indicates an angle at which a reflection angle of the pumping light of the skew mode in a boarder between the inner cladding 13 and the outer cladding 14 is projected on a cross section of the rare-earth-doped fiber 10. Such a reflection angle θ may be in a range of 0° to +90°. The skew mode of the reflection angle θ transmits through only outside of a circle 17 which has a radius which is indicated by "r sin θ". A half of the skew mode exists in a range which is indicated by "θ≦45°". Therefore, it is preferable that the outer core 12 should be disposed outside of a circle which has a radius which is indicated by "r sin45° ≒ 0.71r" so as to utilize more than a half of the skew mode effectively. That is, it is preferable that the outer core 12 should be disposed such that the distance between the outer core 12 and the center of the fiber in the inner cladding 13 should be greater than 0.71r.

Here, it is not necessary that the distance between the entire outer cladding 12 and the center of the fiber should be disposed outside of the area which is indicated by 0.71r or greater in the inner cladding 13. That is, it is acceptable as long as at least an outer cladding 12 is disposed in such an area.

Furthermore, a plurality of cores (the center cores 11 and the outer cores 12) have the inner cladding 13 commonly; therefore, it is possible to pump a light in a plurality of cores by launching the pumping light from a light source into the rare-earth-doped fiber 10. Therefore, according to the optical fiber laser which uses the rare-earth-doped fiber 10, it is possible to reduce more launching section for the pumping light than in a case of a conventional high-output optical fiber laser in which a plurality of rare-earth-doped fibers are used. Therefore, it is possible to manufacture a high-output optical fiber laser at a cheaper cost.

Here, the rare-earth-doped fiber 10 which is shown in FIG. 1 and the rare-earth-doped fiber 103 which is shown in FIGS. 5A and 5B are compared with each other. Here, there is a following condition. Diameter of the above fibers are 125 µm. The diameter of the center core 11 in the rare-earth-doped fiber 10, the diameter of the outer core 12, the diameter of the core 112 in the rare-earth-doped fiber 103 are equal. The density of a rare-earth element dopant in the rare-earth-doped fiber 10 and the density of a rare-earth element dopant in the rare-earth-doped fiber 103 are equal. In such a case, the optical fiber laser which uses the rare-earth-doped fiber 10 can emit an output which is seven times as much as an output of the optical fiber laser which uses the rare-earth-doped fiber 103. This is because the rare-earth-doped fiber 10 has seven cores which are the same as the core in the rare-earth-doped fiber 103.

FIG. 3 is a general view for showing an example for an optical fiber laser according to the present invention.

In FIG. 3, reference numeral 21 indicates a pumping laser diode. Reference numeral 22 indicates an optical filter. Reference numeral 10 indicates a rare-earth-doped fiber.

In this optical fiber laser, the optical filter 22 is connected to an end surface of the rare-earth-doped fiber 10 for transmitting a laser light which is emitted from the pumping laser diode 21 and reflecting the laser light which is emitted from the rare-earth-doped fiber 10. The pumping laser diode 21 for emitting the laser light so as to be incident into the rare-earth-doped fiber 10 is connected to the optical filter 22.

The optical fiber laser in the present embodiment uses the above rare-earth-doped fiber 10; therefore, there is not an unstable oscillation which may be observed in a multi-mode optical fiber laser. Thus, it is possible to realize a stable operation. Also, it is possible to realize a higher output by the optical fiber laser according to the present embodiment. In addition, it is possible to improve the efficiency for pumping a light.

## Claims

1. A rare-earth-doped fiber comprising:
a plurality of cores which are made of silica glasses to which rare-earth-doped elements are doped;
an inner cladding which is disposed around the core such that the refractive index in the inner cladding is lower than a refractive index in the core;
an outer cladding which is disposed around the inner cladding such that the refractive index in the outer cladding is lower than the refractive index in the inner cladding.

2. A rare-earth-doped fiber according to Claim 1 wherein a distance between at least the core and a center of the rare-earth-doped fiber is disposed in an area outer than 0.71 of a radius of the inner cladding.

3. An optical fiber laser wherein the rare-earth-doped fiber according to the Claim 1 or 2 is used.

4. A rare-earth-doped fiber according to Claim 1 wherein the core is formed by a silica glass or a silica glass to which an element such as Ge or Al is doped.
